# EUROPÄISCHE PATENTSCHRIFT

(11) **EP 0 499 884 B1**
(45) Veröffentlichungstag und Bekanntmachung des Hinweises auf die Patenterteilung: **23.04.1997**
(21) Anmeldenummer: 92101886.7
(22) Anmeldetag: 05.02.1992
(51) Int. Cl.: E05F 15/14

(54) **Verfahren und Einrichtung zur Betriebssteuerung einer automatischen Tür**
Process and apparatus for operating control of an automatic door
Procédé et dispositif pour la commande de fonctionnement d'une porte automatique

(30) Priorität: 20.02.1991 DE 4105323
(43) Veröffentlichungstag der Anmeldung: 26.08.1992
(73) Patentinhaber: SIEMENS AKTIENGESELLSCHAFT, 80333 München (DE)
(72) Erfinder: Rowedda, Volker, Dipl.-Ing., W-3017 Pattensen (DE); Sonntag, Guido, Dipl.-Ing., W-3007 Gehrden 4 (DE)

(56) Entgegenhaltungen:
- EP-A- 0 272 005
- WO-A-81/01834
- GB-A- 2 103 710
- US-A- 4 994 724

## Beschreibung

Die Erfindung betrifft ein Verfahren zur Betriebssteuerung einer automatischen Tür, mit einem Antriebsmotor, insbesondere einem Gleichstrommotor, zur Bewegung der Türteile, etwa Türblätter oder -flügel, wobei Weg und Geschwindigkeit der Türteile durch elektronische Steuerung des Antriebsmotors derart eingestellt werden, daß ein Streckenmodell und ein Geschwindigkeitsmodell der bewegten Teile gebildet, gespeichert und zur Steuerung verwendet werden, wobei zunächst die Daten des Streckenmodells, inbesondere über eine Testbewegung der bewegten Türteile, ermittelt werden sowie eine Einrichtung zur Durchführung des Verfahrens. Aus dem Dokument US-A-4 994 724 sind ein Verfahren und eine Einrichtung bekannt, die die Merkmale des Oberbegriffes der Ansprüche 1 und 5 aufweisen.

Verfahren und Einrichtungen zur Betriebssteuerung einer automatischen Tür sind in vielfältiger Ausgestaltung bekannt. Eine Betriebssteuerung einer automatischen Tür, speziell einer Aufzugstür, wird z.B. in der WO 81/01834 beschrieben. Bei dieser bekannten Betriebssteuerung wird einem Prozessor u.a. ein Weg- und Geschwindigkeitsverlauf der Türflügel oder -blätter eingegeben. Aufgrund der Eingaben erfolgt eine Regelung der Geschwindigkeit im Verlauf der Türbewegung. Durch die Regelung soll insbesondere eine sanfte und gleichmäßige Türbewegung erreicht werden. Eine derartige Türsteuerung mit Regelung der Beschleunigung und Abbremsung ist sehr aufwendig und für viele Einsatzfälle, insbesondere für Gebäudetüren, nicht passend.

Eine besonders weit entwickelte Betriebssteuerung einer automatischen Tür mit einem Steuergerät mit Microcontroller zeigt die US-A-4 994 724. Diese Betriebssteuerung führt nach jedem Öffnungs-Schließvorgang einen Korrekturvorgang für die Tür-Positionen durch, an denen Steuerbefehle gegeben werden. Der Prozessor mit seiner Peripherie und die verbundene Sensorik ist relativ aufwendig.

Es ist Aufgabe der Erfindung, ein Verfahren und eine Einrichtung zur Betriebssteuerung einer automatischen Tür anzugeben, die gegenüber den bekannten Betriebssteuerungen einfacher und kostengünstiger sind. Dabei soll die neue Betriebssteuerung bei Installation und im Betrieb eine automatische Optimierung beinhalten. Als Prozessor soll ein einfacher Prozessor dienen können.

Die Aufgabe wird durch die kennzeichnenden Merkmale des Verfahrens anspruchs 1 bzw. des Einrichtungs anspruchs 5 gelöst.

Durch das erfindungsgemäße Zusammenwirken eines einfachen Streckenmodells mit einem zunächst abgeschätzten, herkömmlichen Geschwindigkeitsverlauf, der auf der Basis der Türgröße und des Türgewichts basiert, in Verbindung mit einem Geschwindigkeitsreferenzpunkt, für den eine Sollgröße der Geschwindigkeit vorgegeben wird, ergibt sich eine wie eine Regelung wirkende Steuerung, die in einem preisgünstigen Prozessor einfach zu verwirklichen ist. Die Vorgabe eines Geschwindigkeitsreferenzpunktes in Verbindung mit Schritt-Annäherungsprozeduren erlaubt dabei vorteilhaft einfach und trotzdem mit ausreichender Genauigkeit das Erreichen der gewünschten Öffnungs- bzw. Schließendgeschwindigkeit. Sowohl die Lage des Geschwindigkeitsreferenzpunktes als auch die Ermittlung der Geschwindigkeit im Geschwindigkeitsreferenzpunkt kann vorteilhaft durch die Daten eines Gebers am Antriebsmotor oder an dem Antriebsmittel, das zwischen dem Motor und den Türblättern oder -flügeln angeordnet ist, erfolgen. Schalter an Umsteuerungspunkten o.ä. können sehr vorteilhaft entfallen.

Alle Schaltvorgänge werden durch den Prozessor in Verbindung mit dem Geber am Antriebsmotor oder an dem Antriebsmittel vorgenommen.

Zum Ausgleich unterschiedlicher Belastungen, insbesondere von dynamisch kurzzeitig auftretenden Lasten, etwa von Windlasten, Schnee etc. ist erfindungsgemäß vorgesehen, daß bei Vorliegen einer niedrigeren Geschwindigkeit im Geschwindigkeitsreferenzpunkt als vorgesehen eine schrittweise Erhöhung der Geschwindigkeit erfolgt, bis die Geschwindigkeit dem vorgegebenen Wert entspricht.

So erfolgt vorteilhaft automatisch eine Optimierung der Öffnungszeit oder Schließzeit unter Berücksichtigung des durch die Lage des Geschwindigkeitsreferenzpunktes vorgegebenen Rest-Bremsbereichs. Die Größe des Rest-Bremsbereichs wird bei der Abschätzung des Geschwindigkeitsverlaufs festgelegt und richtet sich u.a. nach Türgröße, Türgewicht und Einsatzort. Eine evtl. Nachjustierung ist vorteilhaft vorgesehen.

Es ist erfindungsgemäß vorgesehen, daß die Geschwindigkeit bei Vorliegen einer zu hohen Geschwindigkeit im Geschwindigkeitsreferenzpunkt um einen vorherbestimmten größeren Betrag zurückgenommen wird. Hierdurch wird vorteilhaft erreicht, daß Geschwindigkeitsüberschreitungen, die zu schwerwiegenderen Störungen der Türfunktion oder zu bleibenden Schäden führen könnten, sofort derart korrigiert werden, daß die nächste Öffnungs- bzw. Schließbewegung mit Sicherheit keine zu große Endgeschwindigkeit aufweist. Die Wiederannäherung an die vorherbestimmte Geschwindigkeit im Geschwindigkeitsreferenzpunkt erfolgt dann in den bereits beschriebenen kleinen Schritten.

Beim Vorliegen von Sondereinflüssen, z.B. durch einen Stop oder bei Abweichungen des Streckenmodells von der tatsächlichen Endstellungslage erfolgt eine vorübergehende Korrektur, wobei vorteilhaft die Steuerung die Korrektur vornimmt.

Zur Betriebssteuerung der automatischen Tür ist eine Einrichtung vorgesehen, die einen Antriebsmotor zur Bewegung der Türteile, z.B. der Türflügel oder -blätter, und ein Antriebsmittel, wie eine Kette, einen Zahnriemen o.ä. sowie einen Prozessor mit Speicher zur programmgeführten Steuerung der Bewegung der Türteile aufweist, wobei in dem Speicher ein Streckenmodell und ein Geschwindigkeitsmodell gespeichert ist. Zusammen mit einer Impulsgebereinheit, die dem Weg und der Geschwindigkeit entsprechende analoge oder digitale Informationen liefert, ist so das erfindungsgemäße Verfahren ausführbar. Die Verwendung eines Geschwindigkeitsreferenzpunktes und anderer, dem Speicher des Prozessors eingegebene Daten, z.B. Wiederannäherungs-Schrittdaten, erlauben dabei die Verwendung eines, in Bezug auf die erreichte gute Bewegungseinhaltung, einfachen Prozessors.

Weitere Vorteile und Einzelheiten ergeben sich aus der nachfolgenden Beschreibung eines Ausführungsbeispiels, anhand der Zeichnung und in Verbindung mit den Unteransprüchen. Im einzelnen zeigen:
- FIG 1: eine automatisch gesteuerte Tür in schematischer Darstellung,
- FIG 2: das Geschwindigkeits-Zeit-Diagramm der Tür und
- FIG 3: das Beschleunigungs-Zeit-Diagramm der Tür.

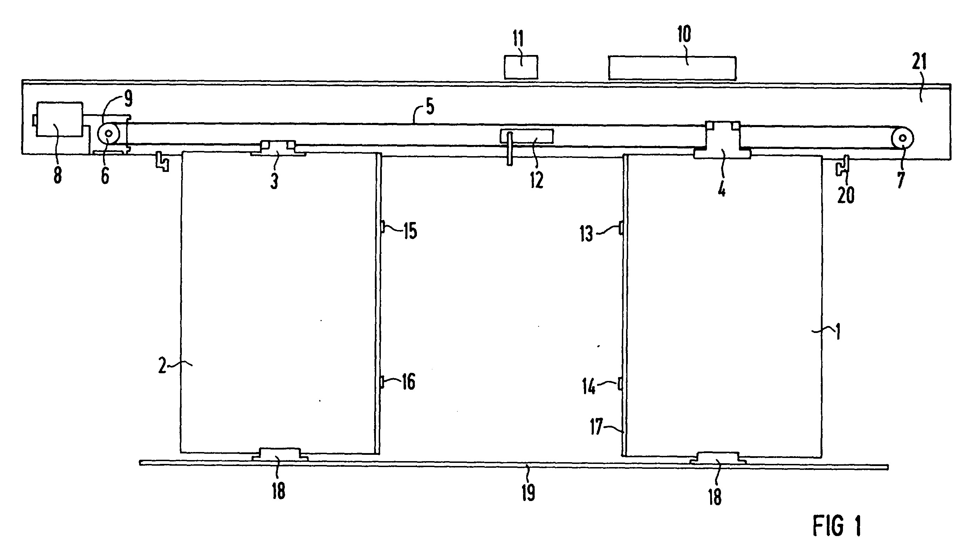

FIG 1 zeigt eine mechanisch angetriebene Tür mit zwei Türblättern, von denen das eine mit 1 und das andere mit 2 bezeichnet ist. Die Türblätter 1 und 2 werden über Aufhängungen 3 und 4 bewegt, die mit Antriebsmitteln versehen sind. In FIG 1 ist als Antriebsmittel ein Zahnriemen 5 vorgesehen, der mit den Aufhängungen 3 und 4 derart verbunden ist, daß sich eine gegenläufige Bewegung der beiden Türblätter 1 und 2 ergibt.

Die Antriebsmittel für die beiden Türblätter 1 und 2, entsprechend FIG 1 also der Zahnriemen 5, werden durch den Antriebsmotor 8, der vorzugsweise ein Untersetzungsgetriebe aufweist und als Gleichstrommotor ausgebildet ist, bewegt. An dem Motor 8, dem Getriebe oder dem Antriebsrad 6, dem ein entsprechendes Umlenkrad 7 auf der anderen Seite des Kopfprofils 21 gegenüber angeordnet ist, ist ein nicht näher gezeigter, kleiner Impulsgeber angebracht, der insbesondere als Inkrementalgeber ausgebildet ist. Von diesem Inkrementalgeber gehen die Impulse für die Steuerung 10 aus, in deren Speicher das Streckenmodell und das Geschwindigkeitsmodell für die Türblätter 1 und 2 gespeichert ist.

Während der Antrieb für die beiden Türblätter 1 und 2, wie üblich, oberhalb der Türblätter 1 und 2 angeordnet ist, erfolgt die bodenseitige Führung über Bodengleiter 18 über die Laufschiene 19.

Für Aufzugstüren nicht erforderlich, jedoch häufig an anderen Türen anzutreffen, ist ein Melder 11 für die Annäherung einer Person, eines Lastfahrzeugs o.ä. oberhalb der Tür. Ein derartiger Melder kann z.B. auf Ultraschall- oder Infrarotbasis arbeiten. Ebenso wie die Verriegelung 12, die in den Mittelbereich der beiden Türblätter 1 und 2 eingreift und diese bei Bedarf verriegelt, ist der Melder nicht Gegenstand der Erfindung. Die Verriegelung 12 ist wahlweise entweder schlüsselbetätigt ausgebildet oder folgt sprachlichen oder Tastatur-Signalen. Auch eine Fernbedienung, z.B. über Funk, ist möglich.

Zwischen den Türblättern 1 und 2 sind in bekannter Weise Lichtschranken mit Sendern 15,16 und Empfängern 13,14 angeordnet. Diese sorgen dafür, daß die Türblätter 1 und 2 bei Anwesenheit eines Hindernisses automatisch wieder auffahren.

Von Bedeutung für die Durchführung der Erfindung sind jedoch die Stopper 20 und die Gummiprofile 17, die als Anschlagelemente für die Türblätter 1 und 2 dienen. Stopper 20 und Gummiprofile 17 sorgen einmal für die weiche endgültige Abbremsung in der Endstellung und andererseits für das Vorhandensein eines Toleranzbereiches, in dem der Antriebsmotor 8, angesteuert durch den Inkrementalgeber oder am Getriebe Stopbefehle erhält.

Bei Nichterreichen des Toleranzbereiches wird der Motor, der dann ja kein Stopsignal empfängt, vorteilhaft zeitverzögert abgeschaltet. Diese Abschaltung setzt einen neuen Testlauf in Gang, da sich ein Unterschied zwischen Streckenmodell und tatsächlicher Fahrstrecke ergeben hat. Der Testlauf wird vorteilhaft mit langsamer Geschwindigkeit durchgeführt und seine Daten werden als neue Daten des Streckenmodells verwendet. Der Geschwindigkeitsreferenzpunkt wird dabei in einem Sicherheitsbereich verschoben.

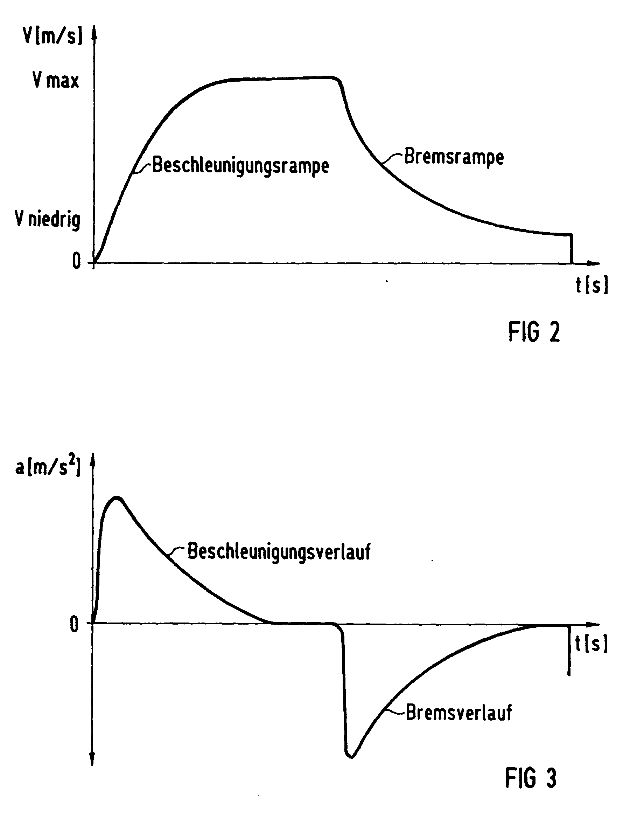

FIG 2 zeigt deutlich die Beschleunigungsrampe und die Bremsrampe zwischen den parallel zur Zeitachse verlaufenden Normal- bzw. Langsamlaufstrecken. Die Größe des Normal- bzw. des Langsamlaufbereichs ist dabei von der Türgröße, dem Einsatzort und dem Türgewicht abhängig. Der Langsamlaufbereich kann dabei für leichte, elastische Türen gegen Null gehen.

Ebenso wie bei dem Beschleunigungsverlauf in FIG 3 wird vorteilhaft mit einem vom Prozessor vorgegebenen stetigen Einlaufen der einzelnen Verlaufsphasen ineinander gearbeitet. Unstetigkeiten wie bei einer Steuerung durch Schalter treten nicht auf.

Sowohl der Geschwindigkeits- als auch der Beschleunigungsverlauf wird weniger von den Reibungskräften, die sich nur relativ wenig ändern, als vielmehr von äußeren Einflüssen, wie dem Winddruck, variablen Halleninnendrücken etc. beeinflußt. Aus diesem Grund wird der Antriebsmotor 8 überdimensioniert. Das gleiche gilt für die Lager der Laufrollen in den Aufhängungen 3 und 4, so daß auch bei unterschiedlichen Verhältnissen, die vorgewählte Beschleunigung und Geschwindigkeit bestmöglich erhalten wird.

Die gewählte Regelung, tatsächlich ergibt sich im Zusammenwirken des Streckenmodells mit dem Geschwindigkeitsreferenzpunkt und seiner Einhaltung durch schrittweise Wiederannäherung nach Überspringen oder Nichterreichen eine, wenn auch zeitlich träge, Regelung, wird allen praktischen Anforderungen gerecht und ist dabei besonders einfach und kostengünstig ausführbar. Sie ist besonders für Gebäudetüren, insbesondere für Außentüren geeignet, jedoch selbstverständlich auch für Aufzugstüren etc. einsetzbar. Ihre positiven Wirkungen, selbsttätige Einstellung, verbunden mit automatischer Korrektur, stellen sich überall in gleicher Weise ein.

## Patentansprüche

1. Verfahren zur Betriebssteuerung einer automatischen Tür, mit einem Antriebsmotor, insbesondere einem Gleichstrommotor, zur Bewegung der Türteile, etwa Türblätter oder -flügel, wobei Weg und Geschwindigkeit der Türteile durch elektronische Steuerung des Antriebsmotors derart eingestellt werden, daß ein Streckenmodell und ein Geschwindigkeitsmodell der bewegten Teile gebildet, gespeichert und zur Steuerung verwendet werden, wobei zunächst die Daten des Streckenmodells, inbesondere über eine Testbewegung der bewegten Türteile, ermittelt werden, **dadurch gekennzeichnet**, daß das Geschwindigkeitsmodell nach Schätzwerten derart gebildet wird, daß an nur einem mit einem Geschwindigkeitsreferenzpunkt übereinstimmenden Wegpunkt, vorzugsweise im Bremsbereich des Streckenmodells, eine Soll-Geschwindigkeit vorgegeben wird, bei der, bei Vorliegen einer niedrigeren Geschwindigkeit im Geschwindigkeitsreferenzpunkt als vorgesehen, eine schrittweise Erhöhung der Geschwindigkeit erfolgt, bis die Geschwindigkeit dem vorgegebenen Wert entspricht sowie daß die Geschwindigkeit bei Vorliegen einer zu hohen Geschwindigkeit im Geschwindigkeitsreferenzpunkt, vorzugsweise um einen vorherbestimmten, größeren Betrag als bei der Geschwindigkeitserhöhung, zurückgenommen wird.

2. Verfahren nach Anspruch 1, **dadurch gekennzeichnet**, daß nach Abweichungen der tatsächlichen Fahrlänge von dem Streckenmodell, z.B. durch einen Stop, ein erneuter Testlauf durchgeführt wird, wobei das Streckenmodell einer Korrektur unterzogen wird, wenn tatsächliche Endstellungslage und gespeicherte Endstellungslage um mehr als einen Toleranzwert voneinander abweichen.

3. Verfahren nach Anspruch 1 oder 2, **dadurch gekennzeichnet**, daß das Streckenmodell über die Bewegung des Antriebsmotors eines Antriebsmittels oder eines Türantriebteils gebildet wird.

4. Verfahren nach einem oder mehreren der Ansprüche 1 bis 3, **dadurch gekennzeichnet**, daß das Streckenmodell aus einer Öffnungsbewegung gebildet und über eine Schließbewegung kontrolliert wird.

5. Einrichtung zur Durchführung des Verfahrens nach einem oder mehreren der vorhergehenden Ansprüche mit einem Antriebsmotor zur Bewegung der Türteile, z.B. der Türflügel oder -blätter, mit einem Antriebsmittel, wie eine Kette, ein Zahnriemen o.ä., und mit einem Prozessor mit Speicher zur programmgeführten Steuerung der Bewegung der Türteile (1,2), wobei in dem Speicher ein Streckenmodell und ein Geschwindigkeitsmodell gespeichert ist, **dadurch gekennzeichnet**, daß das Geschwindigkeitsmodell im Prozessor nur einen einem Wegpunkt zugeordneten Geschwindigkeitsreferenzpunkt, vorzugsweise im Bereich der Bremsstrecke aufweist, in dem eine vorgegebene Geschwindigkeit mit der tatsächlichen Geschwindigkeit verglichen wird, wobei der Prozessor die Ist- und die Sollgeschwindigkeit in dem mit dem Geschwindigkeitsreferenzpuckt übereinstimmenden vorgegebenen Wegpunkt vergleichend und kleine Wiederannäherungsbefehle bei Unterschreiten der Sollgeschwindigkeit gebend, die bis zum Erreichen der Sollgeschwindigkeit wiederholt werden, und einen Rückstellungsbefehl größer als der Wiederannäherungsbefehle bei Überschreiten der Sollgeschwindigkeit anordnend ausgebildet ist.

6. Einrichtung nach Anspruch 5, **dadurch gekennzeichnet**, daß der Prozessor Speicher-, Logik- und Rechenelemente aufweist, die das Streckenmodell aufnehmen und bei Toleranzüberschreitungen korrigieren.

## Claims

1. Method for the operational control of an automatic door, having a driving motor, in particular a direct-current motor, for moving the door portions, for instance leaves or wings of a door, wherein path and velocity of the door portions are adjusted by electronic control of the driving motor in such a way that a route model and a velocity model of the moved portions are formed, stored and used for the control, wherein first of all the data of the route model are established, in particular by way of a test movement of the moved door portions, characterised in that the velocity model is formed according to estimated values in such a way that at only one path point, which coincides with a velocity reference point, preferably in the braking range of the route model, there is specified a desired velocity at which, if there is a lower velocity in the velocity reference point than intended, a step-by-step increase in the velocity takes place until the velocity corresponds to the specified value, and also in that if there is a velocity in the velocity reference point that is too high, the velocity is preferably reduced by a predetermined amount which is greater than in the case of the velocity increase.

2. Method according to claim 1, characterised in that after deviations of the actual travel length from the route model, for example as a result of a stop, a renewed test run is carried out, wherein the route model is submitted to a correction if actual final position and stored final position differ from each other by more than a tolerance value.

3. Method according to claim 1 or 2, characterised in that the route model is formed by way of the movement of the driving motor of a driving means or of a door-driving portion.

4. Method according to one or more of the claims 1 to 3, characterised in that the route model is formed from an opening movement and is controlled by way of a closing movement.

5. Device for carrying out the method according to one or more of the preceding claims, having a driving motor for moving the door portions, for example the wings or leaves of a door, having a driving means, such as a chain or a toothed belt or suchlike, and having a processor with a memory for the programmed control of the movement of the door portions (1, 2), with a route model and a velocity model being stored in the memory, characterised in that the velocity model in the processor has only one velocity, reference point allocated to a path point, preferably in the region of the braking section, in which velocity reference point a specified velocity is compared with the actual velocity, with the processor being constructed in a manner such that it compares the actual velocity and the desired velocity in the path point which coincides with the velocity reference point, and if there is a fall below the desired velocity gives small re-approximation commands which are repeated until the desired velocity is reached, and if the desired velocity is exceeded arranges a resetting command which is greater than the re-approximation commands.

6. Device according to claim 5, characterised in that the processor has memory elements, logic elements and computing elements, which take up the route model and correct it if the tolerance is exceeded.

## Revendications

1. Procédé de commande du fonctionnement d'une porte automatique, comportant un moteur d'entraînement, notamment un moteur à courant continu, pour déplacer les parties de la porte, par exemple les vantaux ou battants de la porte, la course et la vitesse des parties de la porte étant réglées par une commande électronique du moteur d'entraînement de telle sorte qu'une modélisation de la course et une modélisation de la vitesse des parties mobiles soient constituées, mémorisées et utilisées pour la commande. les données de la modélisation de la course étant dans un premier temps déterminées notamment par un test de déplacement des parties mobiles de la porte, caractérisée par le fait que la modélisation de la vitesse est constituée d'après des valeurs estimatives de telle sorte qu'en un point seulement de la course correspondant au point de référence de la vitesse, de préférence dans la plage de décélération de la modélisation de la course, soit prescrite une vitesse de consigne qui, lorsque la vitesse est inférieure à celle prévue au point de référence de la vitesse, est augmentée progressivement jusqu'à ce que la vitesse corresponde à la valeur prescrite, ainsi que par le fait que la vitesse est réduite lorsque la vitesse au point de référence de la vitesse est trop grande. de préférence d'une valeur prédéterminée qui est supérieure à l'augmentation de la vitesse.

2. Procédé selon la revendication 1, caractérisé par le fait que. en fonction des différences entre la longueur réelle de la course et la modélisation de la course, dues par exemple à un arrêt, un nouveau test de marche est effectué, la modélisation de la course étant soumise à une correction lorsque la position de fin de course réelle et la position de fin de course mémorisée diffèrent l'une de l'autre de plus d'une valeur de tolérance.

3. Procédé selon la revendication 1 ou 2, caractérisé par le fait que la modélisation de la course est constituée par l'intermédiaire du mouvement du moteur d'entraînement d'un moyen d'entraînement ou d'un élément d'entraînement de la porte.

4. Procédé selon l'une ou plusieurs des revendications 1 à 3, caractérisé par le fait que la modélisation de la course est constituée à partir d'un mouvement d'ouverture et contrôlée par l'intermédiaire d'un mouvement de fermeture.

5. Dispositif destiné à la mise en oeuvre du procédé selon l'une ou plusieurs des revendications précédentes, comportant un moteur d'entraînement destiné à déplacer les parties de la porte, par exemple les vantaux ou battants de la porte, un moyen d'entraînement tel qu'une chaîne, une courroie crantée ou similaire, et un processeur avec une mémoire qui est destiné à la commande pilotée par programme du déplacement des parties de la porte (1, 2), une modélisation de la course et une modélisation de la vitesse étant mémorisées dans la mémoire, caractérisé par le fait que la modélisation de la vitesse dans le processeur ne comporte qu'un seul point de référence de la vitesse associé à un point de la course, de préférence dans la plage de décélération, dans lequel une vitesse prescrite est comparée à la vitesse réelle, le processeur étant conçu pour comparer la vitesse réelle et la vitesse de consigne au point prédéterminé de la course correspondant au point de référence de la vitesse, et, lorsque la vitesse de consigne n'est pas atteinte, pour ne pas délivrer des instructions de réajustement, qui sont répétées jusqu'à ce que la vitesse de consigne soit atteinte, et pour émettre une instruction de réduction plus importante que les instructions de réajustement lors du dépassement de la vitesse de consigne.

6. Dispositif selon la revendication 5, caractérisé par le fait que le processeur comporte des éléments de mémoire, de logique et de calcul, qui enregistrent la modélisation de la course et la corrigent en cas de dépassements des tolérances.
